# EUROPEAN PATENT SPECIFICATION

(11) **EP 2 701 897 B1**
(45) Date of publication and mention of the grant of the patent: **06.05.2015**
(21) Application number: 12717863.0
(22) Date of filing: 23.03.2012
(51) Int. Cl.: B29D 30/70, B29D 30/00, B29D 30/22

(54) **PROCESS AND PLANT FOR BUILDING TYRES FOR VEHICLE WHEELS**
VERFAHREN UND ANLAGE ZUR HERSTELLUNG VON REIFEN FÜR FAHRZEUGRÄDER
PROCÉDÉ ET ÉQUIPEMENT DE CONSTRUCTION DE PNEUS POUR DES ROUES DE VÉHICULES

(30) Priority: 28.04.2011 IT MI20110710; 05.05.2011 US 201161482720 P
(43) Date of publication of application: 05.03.2014
(73) Proprietor: Pirelli Tyre S.p.A., 20126 Milano (IT)
(72) Inventor: MANCINI, Gianni, I-20126 Milano (IT); MARCHINI, Maurizio, I-20126 Milano (IT); DALE', Pietro, I-20126 Milano (IT); BOSIO, Gian Luigi, I-20126 Milano (IT); CREPALDI, Andrea, I-20126 Milano (IT)
(74) Representative: Tansini, Elio Fabrizio
(86) International application number: PCT/IB2012/051398
(87) International publication number: WO 2012/146988

(56) References cited:
- EP-A1- 1 375 118
- WO-A1-01/89818
- WO-A1-2008/152453
- WO-A1-2009/081220
- DE-A1- 19 532 352
- FR-A1- 2 617 087
- GB-A- 1 407 354

## Description

The present invention relates to a process and a plant for building tyres for vehicle wheels. More specifically, the invention is particularly addressed to the manufacture of ultra high performance tyres, above all for sports car races.

A tyre for vehicle wheels generally comprises a carcass structure including at least one carcass ply having respectively opposite end flaps in engagement with respective annular anchoring structures, integrated into the regions usually identified with the name of "beads", defining the radially internal circumferential edges of the tyre.

Associated with the carcass structure is a crown structure. To the aims of the present specification and the following claims, by "crown structure" of a tyre it is intended at least one belt structure or breaker having one or more belt layers placed in radially superposed relationship relative to each other and to the carcass ply, having textile or metallic reinforcing cords in a crossed orientation and/or substantially parallel to the circumferential extension direction of the tyre. More preferably, the crown structure comprises a belt structure having at least one belt layer and a tread band of elastomeric material applied at a radially external position to the belt structure. In addition, respective sidewalls of elastomeric material are applied at an axially external position to the side surfaces of the carcass structure, each extending from one of the side edges of the tread band until close to the respective annular anchoring structure to the beads. In tyres of the "tubeless" type, an airtight coating layer usually referred to as "liner" covers the inner tyre surfaces.

DE 19532352 discloses a belt structure wherein each belt layer is prefolded into the desired form and is applied to the carcass in the already folded state. Folding of the belt layer material is achieved on the strip material in a plane form.

FR 2 617 087 A1 discloses a bulding process of a belt by using a drum wherein the ends of the belt ply are folded on said drum.

WO 2009/081220, in the name of the same applicant, provides a building plant comprising a carcass structure building line and a crown structure building line. The crown structure building line comprises a first building drum whereon an annular assembly comprising a first belt layer and a second belt layer radially external to the first belt layer is built. The crown structure building line further comprises at least one auxiliary drum whereon axially opposite end portions of the first belt layer are turned up so as to obtain at least a partial overlapping of the end portions of the first belt layer on said at least one second belt layer.

The Applicant thinks it particularly useful to turn up the ends of the belt layers for performance purposes. In fact, turning up of the axially opposite flaps of a belt layer onto the belt layers radially external thereto gives the tyre more reactivity and quickness of response to the tyre during the step of getting over a bend.

Referring particularly to ultra high performance tyres,

above all if intended for car races imposing hard handling conditions, the Applicant thinks it suitable to make the belt layer or layers starting from manufactured articles in the form of a strip with reinforcing cords of the textile type, the axially opposite side edges of which are turned up to at least partly cover the radially outermost belt layer.

The Applicant has however noticed that in manufacturing some tyre models it is preferred that the axially opposite flaps of one or more of the radially innermost belt layers be turned up on the radially outermost belt layer or layers, so as to inhibit the free ends of the reinforcing cords from mechanically interfering against the carcass structure thereby causing crackings that would tend to propagate and damage the tyre structure.

The Applicant has verified the possibility of manufacturing the belt structure through a process in which an annular assembly comprising a first radially internal belt layer and at least one radially external belt layer is formed on a first drum. Axially opposite end portions of the first belt layer would then be turned up onto said at least one second belt layer, so as to at least partly cause overlapping of the end portions of the first belt layer onto said at least one radially external belt layer.

Moreover, the Applicant believes that in making tyres for sports races and/or ultra high performance tyres, manufacture of the tread band by spiralling is particularly advantageous, i.e. through winding up of a continuous elongated element of raw elastomeric material so as to form coils respectively disposed adjacent to each other around the belt structure until defining the tread band consisting of one or more layers of the desired thickness and cross-section profile.

The Applicant has however perceived that turning-up carried out in making the belt structure and spiralling carried out in forming the tread band typically need rather long manufacturing times; these times, added to each other in manufacturing the crown structure, tend to reduce productivity. In addition use of relatively complicated and bulky equipment is required for these operations, which equipment can be hardly integrated into the same production unit.

In this context, the Applicant has felt the necessity to reconcile the requirement of carrying out particular operations such as turning-up and spiralling, requested in making the crown structure for the purpose of achieving excellent quality standards and maximum repeatability of results in the final product, with the requirement of obtaining high exploitation of the equipment and efficient limitation of the processing down time, to the benefit of the production efficiency.

The Applicant has perceived that if provision is made for the simultaneous execution of different process actions during manufacture of the crown structures intended for respective tyres under production, it is possible to optimise the time required for execution of each of said process actions, in harmony with the time required for building the carcass structure and coupling it to the crown structure itself.

The Applicant has therefore found that by providing, within the area of the crown structure building, turning-up operations for one or more belt layers and spiralling operations for the tread band during which said belt layers are transferred onto a service drum where building of said tread band is continued, processing of the different crown structures appears to be divided, to the benefit of the qualitative features of the final product, without productivity being damaged.

In greater detail, in accordance with a first aspect, the invention relates to a process for tyre production, comprising:
- building a carcass structure;
- building a crown structure;
- coupling the crown structure with the carcass structure;
wherein building of the crown structure comprises:
- forming at least one belt layer on an auxiliary drum for at least partly manufacturing a belt structure;
- turning up the axially opposite side flaps of said at least one belt layer on the auxiliary drum;
- transferring the belt structure from the auxiliary drum to at least one service drum;
- forming a tread band by winding up at least one continuous elongated element of elastomeric material, through formation of coils disposed mutually side by side around the belt structure carried by the service drum.

Thus the Applicant thinks it possible to reconcile the requirement of carrying out particular operations requested in manufacturing the crown structure for the purpose of achieving excellent qualitative standards and maximum repeatability of results in the final product, with the requirement of obtaining high exploitation of the equipment and efficient reduction in the down time during processing, to the benefit of the production efficiency. In particular, execution of the turning-up operations on at least one of the belt layers and the spiralling operations for obtaining the tread band, enables achievement of excellent qualitative features in the final product, particularly appreciated in tyres for ultra high performance sports races, without productivity being impaired.

In accordance with a second aspect, the invention relates to a plant for tyre production, comprising:
- a building line for carcass structures;
- a building line for crown structures;
- an assembling location in which each crown structure is coupled with one of the carcass structures;
wherein said building line for crown structures comprises:
- at least one auxiliary drum;
- at least one service drum;
- devices for forming a belt structure on said auxiliary drum, said devices comprising members for forming at least one belt layer and members for turning up axially opposite side flaps of said at least one belt layer on the auxiliary drum;
- transfer devices for transferring a belt structure at least partly formed on the auxiliary drum to said at least one service drum;
- devices for forming a tread band by winding at least one continuous elongated element of elastomeric material, through formation of coils disposed in mutual side by side relationship around the belt structure carried by the service drum.

The present invention, in accordance with at least one of the above aspects, can have one or more of the preferred features hereinafter described.

The action of forming, on said auxiliary drum, the belt structure of at least one first tyre being processed can be at least partly carried out simultaneously with the action of forming the tread band of at least one second tyre being processed, on said at least one service drum.

The action of coupling the crown structure to the carcass structure is preferably carried out following the same operating rate as followed by the actions of forming the tread band and forming the belt structure.

To the aims of the present specification, the term "operating rate" is understood as indicating the inverse of the time intervening between starting of a processing operation at a given location, the assembling location for example or other work location, and starting of a new processing operation aiming at building an immediately following tyre, in the same work location. For example, if said time is 60 s, the operating rate will be 1/60 Hz.

Building of the crown structures belonging to respective tyres being processed can be simultaneously carried out on respective service drums.

Thus it is possible to further reduce the time cycle, for example for carrying out spiralling intended for completing the belt structure and/or obtaining the tread band, thereby further increasing the operating flexibility of the process. In particular, it is possible to increase accuracy in carrying out spiralling, by limiting the linear deposition speed of the continuous elongated element for example, so as to ensure more geometric accuracy in the deposition and eliminating the risk of inclusion of air bubbles between the coils formed with the continuous elongated element, without impairing productivity.

The action of forming the tread band of the first tyre being processed and the action of forming the tread band of the second tyre being processed are at least partly carried out simultaneously with the manufacture of the belt structure of a further tyre being processed.

A new belt structure will be already available for making the tread band, as soon as processing for manufacturing the tread band on the previous tyre has been completed.

During formation of the tread band, said at least one service drum is preferably driven in rotation and moved by at least one robotized arm in front of a dispensing member supplying said continuous elongated element of elastomeric material.

Movement of the service drum by a robotized arm preferably of the anthropomorphic type, simplifies the spiralling operation.

Also carried out can be the action of positioning and supporting said at least one service drum by at least one robotized arm during the action of transferring the belt structure from the auxiliary drum to said at least one service drum.

The high operating flexibility typical of the preferably anthropomorphic robotized arm reduces the operating constraints in positioning the different work locations. In fact, transfer of the service drum for interaction with other work locations, before and/or after carrying out spiralling, can be achieved quickly and with high flexibility of the geometric positioning. In addition, the same robotized arm as used for supporting the service drum during the spiralling operations can be advantageously employed for the transfer operations.

Preferably, the action of forming said at least one belt layer comprises:
- circumferentially winding at least one manufactured article in the form of a strip of elastomeric material including textile cords, around the auxiliary drum;
- mutually joining the opposite ends of the manufactured article in the form of a strip.

Use of such a manufactured or semifinished article ensures optimal structural homogeneity of the belt layers, which is particularly appreciated in tyres designed to provide very high performances in sports competitions.

Building of the crown structure can further comprise the action of circumferentially winding a pair of ribbon-like reinforcing inserts, each of them being radially superposed on an end edge of one of the turned-up side flaps of said at least one belt layer.

The turned-up end edges are in this way conveniently protected, the undesired contact with other parts of the tyre during use thereof being avoided.

Building of the crown structure can further comprise the action of circumferentially winding up at least one reinforcing element of elastomeric material longitudinally incorporating at least one continuous cord, in the form of coils disposed in axial side by side relationship around said at least one belt layer.

Thus an additional belt layer is formed which is usually referred to as "zero-degree layer" in compliance with the orientation of the reinforcing cords relative to a circumferential direction, which is useful for maintaining a desired cross-section profile of the tyre, even under the effect of high centrifugal forces triggered during use.

Winding of said reinforcing element can be carried out on the belt structure transferred onto the service drum.

It is thus possible to balance the work time for the operations carried out on the auxiliary drum and the service drum, respectively. In addition, formation of the zero-degree layer on the service drum allows the belt structure to be shaped, in case of need, according to a curvilinear cross-section profile using a service drum having a convex-profile outer surface.

Preferably, the action of transferring the belt structure from the auxiliary drum to said at least one service drum comprises the actions of:
- removing the belt structure from the auxiliary drum by a first transfer member;
- engaging the belt structure on the service drum by the first transfer member.

Removal of the belt structure from the auxiliary drum comprises the actions of:
- axially inserting the auxiliary drum carrying the belt structure into the first transfer member;
- engaging the belt structure with the first transfer member;
- radially contracting the auxiliary drum for disengaging it from the belt structure;
- translating the auxiliary drum in an axial direction relative to the first transfer member for removing the auxiliary drum from the belt structure.

Preferably, the action of engaging the belt structure on the service drum comprises:
- axially inserting the service drum into the first transfer member carrying the belt structure;
- radially expanding the service drum so as to engage it with the belt structure;
- disengaging the first transfer member from the belt structure;
- axially translating the service drum carrying the belt structure for removing the service drum carrying the belt structure from the first transfer member.

Preferably, the first transfer member keeps a stationary positioning during transfer of the belt structure.

The first transfer member can therefore have a very simple structure, the axial movements being fully carried out by the auxiliary drum and the service drum. In this regard, it is possible to utilise the axial mobility already required from the service drum for dispensing the continuous elongated element during formation of the tread band, and from the auxiliary drum for its movement between different work locations provided for manufacture of the belt structure.

Coupling of the crown structure with the carcass structure preferably comprises the action of transferring the crown structure from the service drum to a primary drum carrying the carcass structure.

Preferably, the action of transferring the crown structure from the service drum to the primary drum comprises the actions of:
- removing the crown structure from the service drum by a second transfer member;
- engaging the crown structure on the primary drum by means of the second transfer member.

Also carried out can be the action of positioning and supporting the service drum by a robotized arm during the action of transferring the crown structure from the service drum to the primary drum.

The same, preferably anthropomorphic, robotized arm used for supporting the service drum during the spiralling operations can be advantageously used for the operations of transferring the crown structure to the second transfer member.

The action of removing the crown structure from the service drum preferably comprises:
- axially inserting the service drum carrying the crown structure into the second transfer member;
- engaging the crown structure with the second transfer member;
- radially contracting the service drum so as to disengage it from the crown structure.

If the axial movements rely on the service drum, it is possible to simplify the structure and operating bulkiness of the second transfer member. In this regard, the axial mobility already requested from the service drum for distributing the continuous elongated element during formation of the tread band can be utilised.

Preferably, the belt-structure forming device, and the tread-band forming devices, operate simultaneously with each other, on the belt structure and the tread band respectively, of respective tyres being processed.

The belt-structure forming devices and the tread-band forming devices can operate simultaneously with manufacture of at least one carcass structure in the carcass-structure building line.

Preferably, the crown-structure building line comprises:
- a first work area in which said at least one auxiliary drum is operatively disposed;
- a second work area in which said at least one service drum is operatively disposed, and
- a first transfer location in which said transfer devices operate.

The tread-forming devices may comprise members for forming a first portion of the tread band and members for forming a second portion of the tread band operating simultaneously with said belt-forming devices.

Use of at least one robotized arm is preferably provided for driving in rotation and moving said at least one service drum in front of at least one dispensing member of said at least one continuous elongated element of elastomeric material.

In addition or alternatively, at least one robotized arm can be provided for supporting the service drum during actuation of the transfer devices.

The members for forming at least one belt layer preferably comprise a feeding unit for supplying at least one manufactured article in the form of a strip of elastomeric material comprising textile cords, to a first work location designed to wind up said at least one manufactured article around the auxiliary drum.

The belt-forming devices can further comprise a feeding unit for supplying a pair of ribbon-like reinforcing inserts to a second work location designed to wind up said ribbon-like reinforcing inserts around said at least one belt layer.

The belt-forming devices preferably comprise a carriage carrying the auxiliary drum and movable for selectively positioning said auxiliary drum in front of at least one first work location and one second work location.

Preferably, the carriage is movable in parallel to a geometric rotation axis of the auxiliary drum.

The members for turning up the axially opposite side flaps of said at least one belt layer are preferably at least partly integrated into said auxiliary drum.

The crown-structure building line can further comprise winding devices for circumferentially winding at least one reinforcing element of elastomeric material into coils disposed axially side by side around said at least one belt layer, which reinforcing element longitudinally incorporates at least one continuous cord.

The winding devices operate on the belt structure carried by the service drum in a third work location.

More particularly, said at least one service drum can be interlocked with at least one third and one fourth work locations.

In a possible embodiment, provision is made for at least one first service drum and one second service drum simultaneously operating each at one of said third and fourth work locations.

The service drum can have an outer surface shaped into a curvilinear cross-section profile.

Preferably, the transfer devices comprise a first transfer member to be alternately positioned around the auxiliary drum and around the service drum.

The first transfer member preferably comprises radially movable elements for selectively engaging and releasing the belt structure.

The auxiliary drum is preferably movable along a geometric rotation axis thereof for being coaxially fitted into the first transfer member.

The auxiliary drum can be radially contractible for disengaging the belt structure engaged by the first transfer member.

The service drum can be movable along a geometric rotation axis thereof for being coaxially fitted into the first transfer member.

The service drum can be radially expandable for engaging the belt structure carried by the first transfer member.

The first transfer member is preferably substantially fixed in said crown-structure building line.

The carcass-structure building line can comprises a primary drum having halves axially movable close to each other for determining radial expansion of the carcass structure.

Preferably, provision is made for a second transfer location including at least one second transfer member that can be alternately positioned around the service drum and around a primary drum operating in the carcass-structure building line.

The service drum is preferably movable along a geometric rotation axis thereof for being coaxially fitted into the second transfer member.

The second transfer member is preferably movable along a geometric rotation axis of the primary drum for positioning the crown structure coaxially around the primary drum.

The service drum can be radially contractible for disengaging the crown structure in engagement with the second transfer member.

Preferably, the robotized arm is an anthropomorphic robotized arm.

Further features and advantages will become more apparent from the detailed description of a preferred but not exclusive embodiment of a process and a plant for building tyres in accordance with the present invention.

This description will be set out hereinafter with reference to the accompanying drawings, given by way of non-limiting example, in which:
- Fig. 1 diagrammatically shows a top view of a plant for building tyres carried out in accordance with a preferred example of the present invention;
- Fig. 2 diagrammatically shows a top view of a plant for building tyres carried out in accordance with a possible preferred variant of the present invention;
- Fig. 3 shows a cross section of a tyre obtainable according to the present invention.

With reference to the mentioned figures, a plant for building tyres for vehicle wheels intended for putting into practice a process according to the present invention has been generally identified with reference numeral 1.

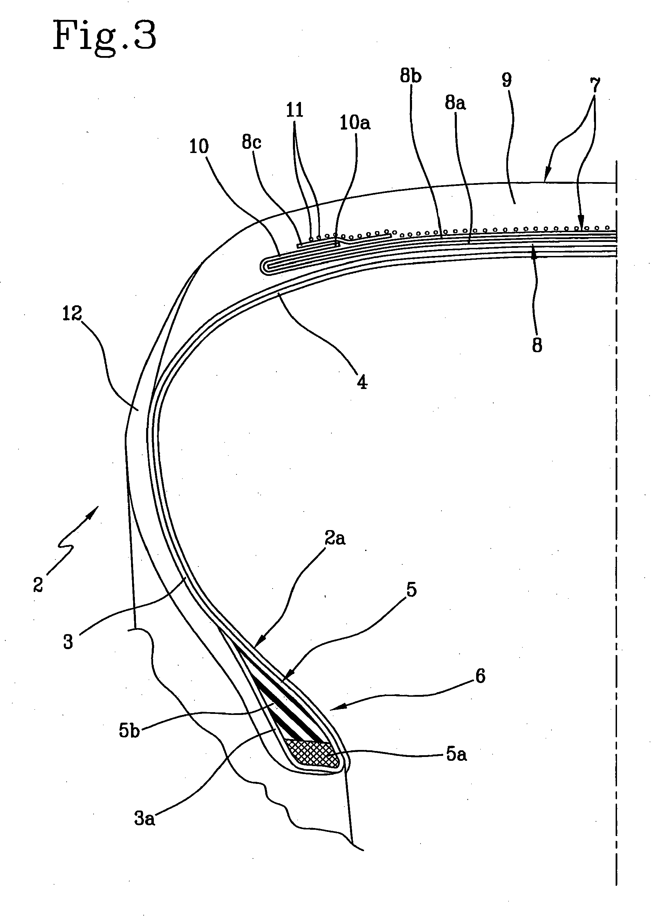

Plant 1 is designed for building tyres 2 (Fig. 3) essentially comprising a carcass structure 2a having at least one or several carcass plies 3. For simplicity of exposition, in the following reference will be made, just by way of example, to the presence of only one carcass ply 3, being understood that if necessary two or more carcass plies will be provided, depending on requirements.

A layer of airtight elastomeric material or so-called "liner" 4 can be applied internally of the carcass ply 3. Two annular anchoring structures 5, each including a so-called bead core 5a carrying an elastomeric filler 5b at a radially external position, are in engagement with respective end flaps 3a of the carcass ply 3.

The annular anchoring structures 5 are integrated in the vicinity of regions usually identified with the name of "beads" 6, where usually engagement between tyre 2 and a respective mounting rim occurs.

A crown structure 7 is circumferentially applied around the carcass structure 3. The crown structure 7 comprises a belt structure 8 having one or more belt layers 8a, 8b and preferably a tread band 9 circumferentially overlapping the belt structure 8.

More particularly, in the example shown provision is made for a first radially-internal belt layer 8a, and at least one second radially-external belt layer 8b.

At least one belt layer, in the example shown the first belt layer 8a, will have axially opposite side flaps 10 turned up at a radially external position on the second radially-outermost belt layer 8b. In the absence of the radially external belt layer or layers 8b, the side flaps 10 of the first belt layer 8a can be turned up upon the first belt layer itself.

The belt structure 8 can further comprise a pair of ribbon-like reinforcing inserts 8c, each of them radially overlapping an end edge 10a of one of the turned-up side flaps 10.

Furthermore, at least one so-called zero-degree layer 11 can be radially superposed on the belt layers 8a, 8b and on possible ribbon-like reinforcing inserts 8c to give the belt structure 8 a predetermined resistance to circumferential and radial extensibility.

Two sidewalls 12, each extending from the corresponding bead 6 to a corresponding side edge of the tread band 9, are applied at laterally opposite positions to the carcass ply 3.

Plant 1 preferably comprises a carcass-structure building line 13, where the carcass structures 2a of the tyres being processed are formed.

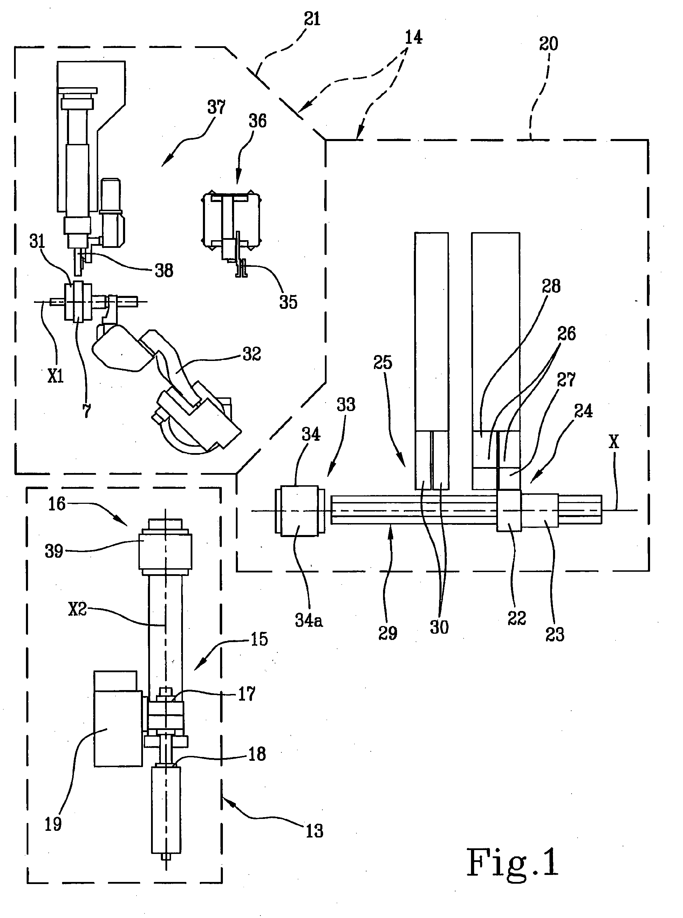

The crown structures 7 are built in a crown-structure building line, identified as a whole with 14 in Fig. 1.

At an assembling location 15, coupling of each carcass structure 2a with a respective crown structure 7 is carried out. More particularly, in the example shown the assembling location 15 is operatively integrated into the carcass-structure building line 13.

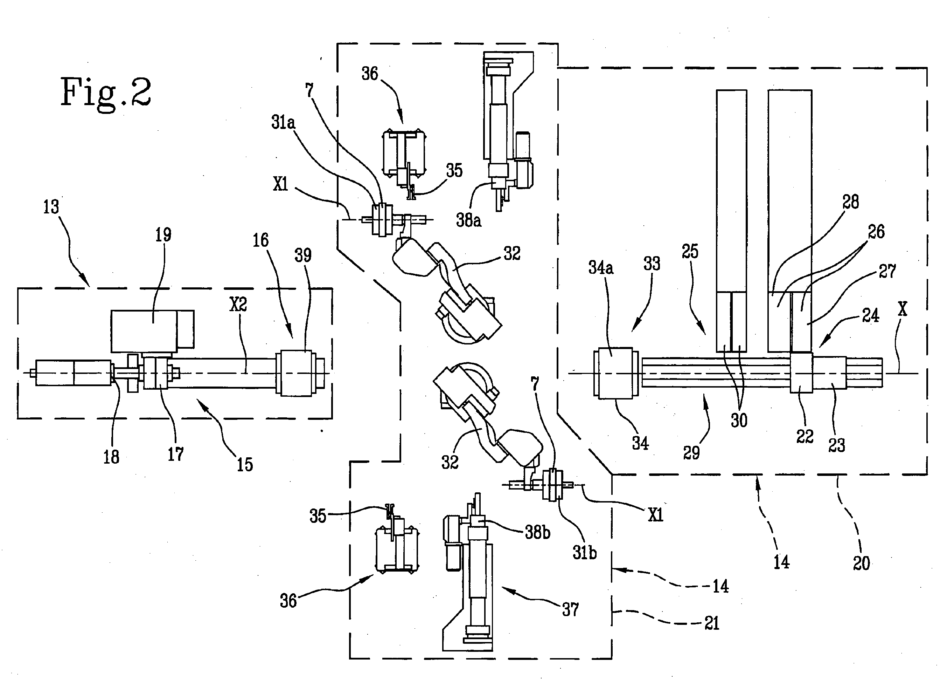

According to an embodiment shown in Figs. 1 and 2, the carcass-structure building line 13 comprises at least one primary drum 17, on which the carcass structure 2a of tyre 2 is built. The primary drum 17 can be operatively supported by a chuck 18 or another device enabling it, if necessary, to be driven in rotation and/or suitably moved between one or more work units 19 during application of the components of the carcass structure 2a.

More specifically, the primary drum 17 is adapted to first receive liner 4, if any, and subsequently the carcass ply 3, so as to form a cylindrical sleeve on the axially opposite side flaps 3a of which the annular anchoring structures 5 will be subsequently fitted. Afterwards, turning-up of the sides flaps 3a of the carcass ply 3 around the annular anchoring structures 5 can be carried out. Application of at least one portion of the sidewalls 12 on the primary drum 17 can be also provided, as well as application of at least one abrasion-proof element, depending on the construction process.

In the above described manufacturing form, the primary drum 17 is of the type adapted to carry out building of tyre 2 following a so-called "unistage process", in which coupling between the crown structure 7 and carcass structure 2a does not require transfer of the carcass structure 2a from said primary drum 17 on which it was built to another drum, since in the primary drum 17 halves that are axially movable towards each other are provided for determining radial expansion of the carcass structure 2a, to couple the latter with the crown structure 7.

In a further preferred embodiment the primary drum 17 can be a second-stage drum or a so-called "shaping drum" on which a carcass structure 2a build somewhere else, for example although not necessarily in said carcass-structure building line, is initially fitted, while subsequently a corresponding belt structure 7 is brought to a position radially external to said drum and duly centred on the already present carcass structure 2a. This type of primary drum 17 too is provided with halves that are axially movable towards each other to determine radial expansion of the carcass structure 2a, to couple it with the crown structure 7.

In both the described cases said assembling location 15 is therefore coincident with the primary drum 17 location.

In the crown-structure building line 14 at least one first work area 20 and at least one second work area 21 can preferably be identified. At the first work area 20 belt-structure forming devices 26 operate for building a belt structure 8 or at least a first part thereof, on at least one auxiliary drum 22.

The auxiliary drum 22 can be rotatably supported by a carriage 23 that is movable preferably in parallel to a geometric rotation axis X of the auxiliary drum, for selectively positioning the latter in front of at least one first work location 24 and one second work location 25 spaced apart from each other.

The belt-structure forming devices 26 preferably comprise members designed to form at least the first belt layer 8a, by means of a first feeding unit 27 for example, operating at the first work location 24 for dispensing at least one first manufactured article in the form of a strip of elastomeric material including textile cords disposed parallelly adjacent to each other and oriented according to a predetermined angle, preferably included between about 30° and about 60°, relative to the longitudinal extension of the manufactured article itself. The first manufactured article dispensed by the first feeding unit 27 is applied around the auxiliary drum 22, driven in rotation so as to form the first belt layer 8a wound up a full turn around the auxiliary drum 22 itself. At the end of winding, the first manufactured article is transversely cut in the vicinity of the auxiliary drum 22 and the ends of the first belt layer 8a thus formed are mutually joined end-to-end.

Also provided can be a second feeding unit 28 for dispensing a second manufactured article in the form of a strip of elastomeric material preferably having width equal to or smaller than that of the first manufactured article. The second manufactured article may comprise textile or metallic cords disposed parallelly adjacent to each other and oriented according to a predetermined angle, preferably included between about 30° and about 60° relative to the longitudinal extension of the manufactured article, and having crossed orientation relative to the cords of the first manufactured article.

The second manufactured article is preferably applied around the first belt layer 8a in the same manner as said first belt layer, so as to form the second belt layer 8b wound up a full turn around the auxiliary drum 22. At the end of winding, the second manufactured article is transversely cut in the vicinity of the auxiliary drum 22, and the ends of the second belt layer 8b thus formed are mutually joined end-to-end.

The second feeding unit 28 can be operatively installed in the same first work location 24 carrying the first feeding unit 27, or in a distinct work location. In the last-mentioned case, intervention of the second feeding unit 28 will take place after actuation of carriage 23, to remove the auxiliary drum 22 from the first work location and bring it to the location carrying the second feeding unit 28.

When deposition of the belt layers 8a, 8b has been completed, the axially opposite side flaps 10 of said at least one first belt layer 8a, preferably axially projecting beyond the respective end edges of the second belt layer 8b, are turned up in such a manner that they are radially superposed externally of the second belt layer itself. This operation can be carried out by suitable turning-up members not described or shown in detail as they are obtainable in a manner known by itself, with the aid for example of inflatable and/or suitably deformable bags upon command of mechanical thrust elements partly or fully integrated into the auxiliary drum 22 itself.

The turning-up operation can be carried out after displacement of carriage 23 for positioning the auxiliary drum 22 to a turning-up location 29 laterally spaced apart from the first work location 24 at which winding up of the first belt layer 8a and/or the second belt layer 8b occurs, so as to avoid mechanical interference between the members intended for formation of the belt layer or layers 8a, 8b and the above mentioned turning-up members.

At the first work area 20 a third feeding unit 30 can be also operatively arranged for supply of the pair of ribbon-like reinforcing inserts 8c, each made in the form of a strip of elastomeric material having axial size preferably smaller that half the axial size of the belt layers 8a, 8b when turning-up has been completed. Each ribbon-like reinforcing insert 8c incorporates preferably textile cords, nylon cords for example, extending longitudinally. The third feeding unit 30 preferably operates in said second work location 25, designed to wind up the ribbon-like reinforcing inserts 8c around the previously formed belt layer or layers 8a, 8b. The second work location is reached by the auxiliary drum 22 following movement of carriage 23, after the turning-up step. The ribbon-like reinforcing inserts 8c can be distributed simultaneously close to the turned-up side flaps 10 of the belt layer or layers 8a, 8b, while the auxiliary drum 22 is being driven in rotation for determining winding of said inserts in a full turn. At the end of winding, each of the ribbon-like reinforcing inserts 8c is transversely cut in the vicinity of the auxiliary drum 22 and joined end-to-end at the respective ends.

When processing in the first work area 20 has been completed, building of the crown structure 7 goes on in the second work area 21, interlocked with at least one service drum 31, preferably connected to a robotized arm 32, preferably of the anthropomorphic type.

To this aim, the auxiliary drum 22 is preferably brought, by axial displacement of carriage 23 for example, to a first transfer location 33 operatively interposed between the first work area 20 and the second work area 21. In the first transfer location 33 devices 34 operate for transferring the belt structure 8 from the auxiliary drum 22 to the service drum 31.

In a preferred embodiment these transfer devices 34 comprise at least one first transfer member 34a that can be alternately positioned around the auxiliary drum 22 and the service drum 31.

Preferably, the first transfer member 34a is substantially fixed in said crown-structure building line 14 and is adapted to be alternately engaged by the auxiliary drum 22 and the service drum 31.

The auxiliary drum 22 in fact is movable along its geometric rotation axis X upon command of carriage 23, for being coaxially inserted into the first transfer member 34a.

When the auxiliary drum 22 is coaxially inserted, preferably at an axially centred position, in the first transfer member 34a, radially movable elements (not shown) operatively associated with said drum and made in the form of circumferentially consecutive circular sectors for example, carry out engagement of the belt structure 8 or the first part thereof formed on the auxiliary drum 22.

The auxiliary drum 22, made up of radially contractible sectors (not shown) is radially contracted so as to disengage the belt structure 8.

By a backward movement of carriage 23, the auxiliary drum 22 is axially translated relative to the first transfer member 34a and consequently removed from the belt structure 8 that is retained by the first transfer member 34a by means of the radially movable elements at a radially contracted position.

The service drum 31 in turn is adapted to be translated along the geometric rotation axis thereof X1 upon command of the robotized arm 32, to be coaxially inserted into the first transfer member 34a carrying the belt structure 8.

The service drum 31 comprising radially movable sectors (not shown) for example, can be radially expanded so as to engage the belt structure 8.

After expansion of the service drum 31, the radially movable elements of the first transfer member 34a are radially moved apart from the belt structure 8 that will remain in engagement with the service drum 31.

In case of need the service drum 31, at least in the radially expanded condition, can show an outer surface having a curvilinear cross-section profile, so as to impose a desired conformation to the belt structure 8 engaged by the service drum 31.

Through the robotized arm 32 the service drum 31 is then axially translated to be removed from the first transfer member 34a together with the belt structure 8.

The robotized arm 32, of the type having six or more movement axes for example, is able to support, drive in rotation and conveniently move the service drum 31 in the second work area 21 for accomplishment of the tread band 9 and, in case of need, of at least one second part of the belt structure 8.

This second part of the belt structure 8 can for example comprise the aforesaid zero-degree layer 11 that, just as an indication, extends over at least 80% of the axial extension of the belt layer or layers 8a, 8b. The zero-degree layer 11 is applicable in addition to or in place of the ribbon-like reinforcing inserts 8c in the first work area 20, by means of winding devices 35 operating in a third work location 36, preferably installed in the second work area 21. The zero-degree layer 11 is obtained by circumferentially winding up at least one reinforcing element of elastomeric material longitudinally incorporating one or more continuous cords, in the form of coils disposed in side by side relationship around the belt layer or layers 8a, 8b.

The reinforcing element can be supplied by the winding devices 35 to the service drum 31, while the latter is being driven in rotation and conveniently moved by the robotized arm 32 in front of the winding devices 35.

When formation of the zero-degree layer 11, if any, has been completed, the robotized arm 32 brings the service drum 31 close to at least one fourth work location 37 wherein tread-band forming devices 38 operate which for example comprise at least one extruder or other member suitable for carrying out controlled supply of a continuous elongated element of elastomeric material. The auxiliary drum 22 is driven in rotation and suitably moved by the robotized arm 32, so as to determine deposition of the continuous elongated element into mutually adjacent coils around the belt structure 8 carried by the service drum 31, until formation of the tread band 9 having the desired conformation and thickness has been completed.

In case of need, as shown by way of example in Fig. 2, the tread-band forming devices 38 can comprise two or more extruders 38a, 38b or different dispensing members, possibly disposed at respectively distinct work locations, so as to form at least one first and one second portions of the tread band 9 respectively, and/or other tyre components, using different-composition materials.

Also provided can be use of at least one first service drum 31a and one second service drum 31b, similar or different from each other, each interlocked with a respective robotized, preferably anthropomorphic, arm 32a, 32b, for carrying out simultaneous building of crown structures 7 belonging to distinct tyres in the second work area 21.

More particularly, formation of the first portion of the tread band 9 on the first service drum 31a and of the second portion of the tread band 9 on the second service drum 31b can be carried out simultaneously.

In addition or alternatively, formation of the tread band 9 of a first and a second tyre being processed can be simultaneously carried out, on the first service drum 31a and on the second service drum 31b, respectively.

In addition or alternatively, as shown by way of example in Fig. 2, formation of the tread band 9 on the first service drum 31a and of the second part of the belt structure 8, i.e. the zero-degree layer 11, on the second service drum 31b can be simultaneously carried out.

When manufacture of the tread band 9 has been completed, the respective service drum 31, 31a, 31b can be brought in engagement relationship to a second transfer location 16, with the aid of the robotized arm 32.

The second transfer location 16 preferably comprises at least one second transfer member 39 that can be alternately positioned around the service drum 31 and around said primary drum 17, operating in the carcass-structure building line 13.

More particularly, the service drum 31 carrying the crown structure 7 is adapted to be translated along the geometric rotation axis thereof X1, upon command of the robotized arm 31, for being coaxially fitted into the second transfer member 39.

The second transfer member 39 for example comprises radially movable elements (not shown) that are adapted to be radially contracted so as to engage the crown structure 7 carried by the service drum 31 in order to remove it therefrom.

After contraction of the radially movable elements of the second transfer member 39, radial contraction of the service drum 31 is determined. The service drum 31 consequently disengages the crown structure 7 that remains in engagement with the second transfer member 39. At this point the service drum 31 can be axially removed from the second transfer member 39, upon the action of the robotized arm 32 and/or following axial movement of the second transfer member itself.

In fact, the second transfer member 39 is preferably movable along a geometric rotation axis X2 of the primary drum 17, as shown in Figs. 1 and 2, so as to position the crown structure 7 coaxially around the primary drum 17.

Following mutual approaching of the halves of the primary drum 17, coupling of the crown structure 7 with the carcass structure 2a is determined.

After the radially movable elements integrated into the second transfer member 39 are moved away, said transfer member can be axially disengaged from the crown structure 7 that will remain in engagement with the carcass structure 2a on the primary drum 17.

After possible additional processing operations have been carried out for the purpose of improving adhesion of the crown structure 7 to the carcass structure 2a, and/or application of the sidewalls 12 on the laterally opposite surfaces of the tyre being processed for example, the built tyre 2 can be removed from the primary drum 17 to be submitted to a final vulcanisation process and/or other processing operations provided in the production cycle.
The above described configuration of the plant is of such a nature that the simultaneous building of several tyres 2 is allowed, with the greatest flexibility.

More specifically, provision of the first and second work areas 20, 21 in the crown-structure building line 14 enables simultaneous building of several crown structures 7 to be carried out. In fact, the belt-structure forming devices 26 and tread-band forming devices 38 are adapted to operate simultaneously with each other, so that formation of the belt structure 8 of at least one first tyre in the first work area 20 is at least partly carried out simultaneously with formation of the tread band 9 of at least one second tyre on the respective service drum 31, in the second work area 21.

Should two or more extruders 38a, 38 be provided, as shown in Fig. 2, or other members distinct from each other for respectively forming at least one first and one second portion of the tread band 9, formation of the tread band 9 of the first tyre being processed and formation of the tread band 9 of the second tyre being processed will be at least partly carried out simultaneously with the manufacture of the belt structure 8 of a further tyre being processed in the first work area 20.

Preferably, simultaneously with the processing operation in the crown-structure building line 14, at least one carcass structure 2a is built in the carcass-structure building line 13. Preferably, the carcass structure 2a that is about to be manufactured is intended for coupling with the crown structure 7, or one of the crown structures 7 being processed in the second work area 21.

The devices for coupling the crown structure 7 with the carcass structure 2a, as well as the carcass-structure building line 13 as a whole, preferably operate at the same operating rate as that of the tread-band forming devices 9 in the second work area 21 and as that of the belt-structure forming devices 26 in the first work area 20, so that each tyre being processed can be immediately transferred to the following work location avoiding storage of tyres being processed along the plant building lines.

## Claims

1. A process for tyre production, comprising:
- building a carcass structure (2a);
- building a crown structure (7);
- coupling the crown structure (7) with the carcass structure (2a),
wherein building of the crown structure (7) comprises:
- forming at least one belt layer (8a, 8b) on an auxiliary drum (22) for at least partly manufacturing a belt structure (8);
- turning up the axially opposite side flaps (10) of said at least one belt layer (8a, 8b) on the auxiliary drum (22);
- transferring the belt structure (8) from the auxiliary drum (22) to at least one service drum (31);
- forming a tread band (9) by winding up at least one continuous elongated element of elastomeric material, through formation of coils disposed mutually side by side around the belt structure (8) carried by the service drum (31).

2. A process as claimed in the preceding claim, wherein the action of forming, on said auxiliary drum (22), the belt structure (8) of at least one first tyre being processed is at least partly carried out simultaneously with the action of forming the tread band (9) of at least one second tyre being processed, on said at least one service drum (31).

3. A process as claimed in one or more of the preceding claims, wherein the action of coupling the crown structure (7) with the carcass structure (2a) is carried out following the same operating rate as followed by the actions of forming the tread band (9) and forming the belt structure (8).

4. A process as claimed in one or more of the preceding claims, wherein on respective service drums building of the crown structures (7) belonging to respective tyres being processed is simultaneously carried out.

5. A process as claimed in one or more of the preceding claims, wherein the action of forming the tread band (9) of the first tyre being processed and the action of forming the tread band (9) of the second tyre being processed are at least partly carried out simultaneously with the manufacture of the belt structure (8) of a further tyre being processed.

6. A process as claimed in one or more of the preceding claims, further comprising the action of positioning and supporting said at least one service drum (31) by means of at least one robotized arm (32) during the action of transferring the belt structure (8) from the auxiliary drum (22) to said at least one service drum (31).

7. A process as claimed in one or more of the preceding claims, wherein building of the crown structure (7) further comprises the action of circumferentially winding a pair of ribbon-like reinforcing inserts (8c), each of them being radially superposed on an end edge (10a) of one of the turned-up side flaps (10) of said at least one belt layer (8a, 8b).

8. A process as claimed in one or more of the preceding claims, wherein building of the crown structure (7) further comprises the action of circumferentially winding at least one reinforcing element of elastomeric material longitudinally incorporating at least one continuous cord, into coils disposed in axial side by side relationship around said at least one belt layer (8a, 8b), wherein winding of said reinforcing element is carried out on the belt structure (8) transferred onto the service drum (31).

9. A process as claimed in one or more of the preceding claims, wherein transferring the belt structure (8) from the auxiliary drum (22) to said at least one service drum (31) comprises the actions of:
- removing the belt structure (8) from the auxiliary drum (22) by a first transfer member (34a);
- engaging the belt structure (8) on the service drum (31) by the first transfer member (34a).

10. A process as claimed in claim 9, wherein the first transfer member (34a) keeps a stationary positioning during transfer of the belt structure (8).

11. A process as claimed in one or more of the preceding claims, wherein coupling the crown structure (7) with the carcass structure (2a) comprises the action of transferring the crown structure (7) from the service drum (31) to a primary drum (17) carrying the carcass structure (2a), wherein transferring the crown structure (7) from the service drum (31) to the primary drum (17) comprises the actions of:
- removing the crown structure (7) from the service drum (31) by a second transfer member (39);
- engaging the crown structure (7) on the primary drum (17) by the second transfer member (39).

12. A plant for tyre production, comprising:
- a building line for carcass structures (13);
- a building line for crown structures (14);
- an assembling location (15) in which each crown structure (7) is coupled with one of the carcass structures (2a) ;
wherein said building line for crown structures (14) comprises:
- at least one auxiliary drum (22);
- at least one service drum (31);
- devices for forming a belt structure (8) on said auxiliary drum (22), said devices comprising members for forming at least one belt layer (8a, 8b) and members for turning up axially opposite side flaps (10) of said at least one belt layer (8a, 8b) on said auxiliary drum;
- transfer devices (34) for transferring a belt structure (8) at least partly formed on the auxiliary drum (22) to said at least one service drum (31);
- devices for forming a tread band (9) by winding at least one continuous elongated element of elastomeric material, through formation of coils disposed in mutual side by side relationship around the belt structure (8) carried by the service drum (31).

13. A plant as claimed in the preceding claim, wherein the belt-structure forming devices (26) and the tread-band forming devices (38) operate simultaneously with each other, on the belt structure (8) and the tread band (9) respectively, of respective tyres being processed.

14. A plant as claimed in one or more of claims 12 and 13, wherein the belt-structure forming devices (26) and the tread-band forming devices (38) operate simultaneously with the manufacture of at least one carcass structure (2a) in the carcass-structure building line (13).

15. A plant as claimed in one or more of claims 12 to 14, wherein said crown-structure building line (14) comprises:
- a first work area (20) in which said at least one auxiliary drum (22) is operatively disposed;
- a second work area (21) in which said at least one service drum (31) is operatively disposed, and
- a first transfer location (33) in which said transfer devices (34) operate.

16. A plant as claimed in one or more of claims 12 to 15, wherein said members for forming at least one belt layer (8a, 8b) comprise a feeding unit (27) for supplying at least one manufactured article in the form of a strip of elastomeric material comprising textile cords, to a first work location (24) designed to wind up said at least one manufactured article around the auxiliary drum (22).

17. A plant as claimed in one or more of claims 12 to 16, wherein said devices for forming a belt structure (8) further comprise a feeding unit (30) for supplying a pair of ribbon-like reinforcing inserts (8c) to a second work location (25) designed to wind up said ribbon-like reinforcing inserts (8c) around said at least one belt layer (8a, 8b).

18. A plant as claimed in one or more of claims 12 to 17, wherein said devices for forming a belt structure (8) comprise a carriage (23) carrying the auxiliary drum (22) and movable for selectively positioning said auxiliary drum in front of at least one first work location (24) and one second work location (25).

19. A plant as claimed in one or more of claims 12 to 18, wherein said members for turning-up the axially opposite side flaps (10) of said at least one belt layer (8a, 8b) are at least partly integrated into said auxiliary drum (22).

20. A plant as claimed in one or more of claims 12 to 19, wherein said crown-structure building line (14) further comprises winding devices (35) for circumferentially winding at least one reinforcing element of elastomeric material into coils disposed axially side by side around said at least one belt layer (8a, 8b), which reinforcing element longitudinally incorporates at least one continuous cord, wherein said winding devices (35) operate on the belt structure (8) carried by the service drum (31) in a third work location (36).

21. A plant as claimed in one or more of claims 12 to 20, wherein said at least one service drum (31) is interlocked with at least one third and one fourth work locations (37).

22. A plant as claimed in the preceding claim, comprising at least one first service drum (31a) and one second service drum (31b) simultaneously operating each at one of said third and fourth work locations (37).

23. A plant as claimed in one or more of claims 12 to 22, wherein said transfer devices (34) comprise a first transfer member (34a) to be alternately positioned around the auxiliary drum (22) and around the service drum (31) .

24. A plant as claimed in claim 23, wherein the first transfer member (34a) is substantially fixed in said crown-structure building line (14).

25. A plant as claimed in one or more of claims 12 to 24, comprising a second transfer location (16) including at least one second transfer member (39) that can be alternately positioned around the service drum (31) and around a primary drum (17) operating in the carcass-structure building line (13).

## Patentansprüche

1. Verfahren zur Herstellung von Reifen, umfassend:
- Aufbauen einer Karkassenstruktur (2a);
- Aufbauen einer Kronenstruktur (7);
- Verbinden der Kronenstruktur (7) mit der Karkassenstruktur (2a),
wobei das Aufbauen der Kronenstruktur (7) Folgenden umfasst:
- Formen mindestens einer Gürtellage (8a, 8b) auf einer Hilfstrommel (22), um zumindest teilweise eine Gürtelstruktur (8) herzustellen;
- Umschlagen der sich axial gegenüberliegenden Seitenlappen (10) der mindestens einen Gürtellage (8a, 8b) auf der Hilfstrommel (22);
- Übertragen der Gürtelstruktur (8) von der Hilfstrommel (22) auf mindestens eine Arbeitstrommel (31);
- Formen eines Laufflächenbandes (9) durch Aufwickeln mindestens eines endlosen langgestreckten Elements aus elastomerem Material unter Bildung von Windungen, die um die Gürtelstruktur (8), die von der Arbeitstrommel (31) getragen wird, nebeneinander angeordnet werden.

2. Verfahren nach dem vorhergehenden Anspruch, wobei der Vorgang der Formung, auf der Hilfstrommel (22), der Gürtelstruktur (8) mindestens eines ersten Reifens, der in Bearbeitung ist, zumindest teilweise gleichzeitig mit dem Vorgang der Formung des Laufflächenbandes (9) mindestens eines zweiten Reifens, der in Bearbeitung ist und zwar auf der mindestens einen Arbeitstrommel (31), ausgeführt wird.

3. Verfahren nach einem oder mehreren der vorhergehenden Ansprüche, wobei der Vorgang der Verbindung der Kronenstruktur (7) mit der Karkassenstruktur (2a) gemäß einem Arbeitsrhythmus ausgeführt wird, der jenem der Vorgänge der Formung des Laufflächenbandes (9) und der Formung der Gürtelstruktur (8) gleich ist.

4. Verfahren nach einem oder mehreren der vorhergehenden Ansprüche, wobei auf entsprechenden Arbeitstrommeln das Aufbauen der Kronenstrukturen (7), die zu entsprechenden Reifen gehören, die in Bearbeitung sind, gleichzeitig erfolgt.

5. Verfahren nach einem oder mehreren der vorhergehenden Ansprüche, wobei der Vorgang der Formung des Laufflächenbandes (9) des ersten Reifens, der in Bearbeitung ist, und der Vorgang der Formung des Laufflächenbandes (9) des zweiten Reifens, der in Bearbeitung ist, zumindest teilweise gleichzeitig mit der Herstellung der Gürtelstruktur (8) eines weiteren Reifens, der in Bearbeitung ist, ausgeführt werden.

6. Verfahren nach einem oder mehreren der vorhergehenden Ansprüche, ferner den Vorgang der Positionierung und Stützung der mindestens einen Arbeitstrommel (31) mittels mindestens eines robotisierten Arms (32) während des Vorgangs der Übertragung der Gürtelstruktur (8) von der Hilfstrommel (22) auf die mindestens eine Arbeitstrommel (31) umfassend.

7. Verfahren nach einem oder mehreren der vorhergehenden Ansprüche, wobei das Aufbauen der Kronenstruktur (7) ferner den Vorgang der Aufwicklung, über den Umfang, eines Paares bandförmiger Verstärkungseinlagen (8c) umfasst, wovon jede radial eine Abschlusskante (10a) eines der umgeschlagenen Seitenlappen (10) der mindestens einen Gürtellage (8a, 8b) überlappend ist.

8. Verfahren nach einem oder mehreren der vorhergehenden Ansprüche, wobei das Aufbauen der Kronenstruktur (7) ferner den Vorgang der Aufwicklung mindestens eines aus elastomerem Material bestehenden Verstärkungselements, in das in Längsrichtung mindestens ein endloser Kord eingearbeitet ist, über den Umfang in Windungen, die um die mindestens eine Gürtellage (8a, 8b) axial nebeneinander angeordnet werden, umfasst, wobei das Aufwickeln des Verstärkungselements an der auf die Arbeitstrommel (31) übertragenen Gürtelstruktur erfolgt.

9. Verfahren nach einem oder mehreren der vorhergehenden Ansprüche, wobei das Übertragen der Gürtelstruktur (8) von der Hilfstrommel (22) auf die mindestens eine Arbeitstrommel (31) die folgenden Vorgänge umfasst:
- Abnehmen der Gürtelstruktur (8) von der Hilfstrommel (22) mittels eines ersten Übertragungsorgans (34a);
- In-Eingriff-bringen der Gürtelstruktur (8) auf der Arbeitstrommel (31) mittels des ersten Übertragungsorgans (34a).

10. Verfahren nach Anspruch 9, wobei das erste Übertragungsorgan (34a) während der Übertragung der Gürtelstruktur (8) eine ortsfeste Positionierung beibehält.

11. Verfahren nach einem oder mehreren der vorhergehenden Ansprüche, wobei das Verbinden der Kronenstruktur (7) mit der Karkassenstruktur (2a) den Vorgang der Übertragung der Kronenstruktur (7) von der Arbeitstrommel (31) auf eine die Karkassenstruktur (2a) tragende Haupttrommel (17) umfasst, wobei das Übertragen der Kronenstruktur (7) von der Arbeitstrommel (31) auf die Haupttrommel (17) die folgenden Vorgänge umfasst:
- Abnehmen der Kronenstruktur (7) von der Arbeitstrommel (31) mittels eines zweiten Übertragungsorgans (39);
- In-Eingriff-bringen der Kronenstruktur (7) auf der Haupttrommel (17) mittels des zweiten Übertragungsorgans (39).

12. Anlage zur Herstellung von Reifen, umfassend:
- eine Fertigungslinie (13) für Karkassenstrukturen;
- eine Fertigungslinie (14) für Kronenstrukturen;
- eine Montagestation (15), in der jede Kronenstruktur (7) mit einer der Karkassenstrukturen (2a) verbunden wird;
wobei die Kronenstruktur-Fertigungslinie (14) Folgendes umfasst:
- mindestens eine Hilfstrommel (22);
- mindestens eine Arbeitstrommel (31);
- Vorrichtungen zum Formen einer Gürtelstruktur (8) auf der Hilfstrommel (22), wobei die Vorrichtungen Organe zum Formen mindestens einer Gürtellage (8a, 8b) und Organe zum Umschlagen sich axial gegenüberliegender Seitenlappen (10) der mindestens einen Gürtellage (8a, 8b) auf der Hilfstrommel (22) umfassen;
- Übertragungsvorrichtungen (34) zum Übertragen einer zumindest teilweise auf der Hilfstrommel (22) geformten Gürtelstruktur (8) auf die mindestens eine Arbeitstrommel (31);
- Vorrichtungen zum Formen eines Laufflächenbandes (9) durch Aufwickeln mindestens eines endlosen langgestreckten Elements aus elastomerem Material unter Bildung von Windungen, die um die Gürtelstruktur (8), die von der Arbeitstrommel (31) getragen wird, nebeneinander angeordnet werden.

13. Anlage nach dem vorhergehenden Anspruch, wobei die Vorrichtungen (26) zur Formung der Gürtelstruktur und die Vorrichtungen (38) zur Formung des Laufflächenbandes gleichzeitig an der Gürtelstruktur (8) bzw. am Laufflächenband (9) jeweiliger Reifen, die in Bearbeitung sind, wirken.

14. Anlage nach einem oder mehreren der Ansprüche 12 und 13, wobei die Vorrichtungen (26) zur Formung der Gürtelstruktur und die Vorrichtungen (38) zur Formung des Laufflächenbandes gleichzeitig zur Herstellung mindestens einer Karkassenstruktur (2a) in der Karkassenstruktur-Fertigungslinie (13) wirken.

15. Anlage nach einem oder mehreren der Ansprüche 12 bis 14, wobei die Kronenstruktur-Fertigungslinie (14) Folgendes umfasst:
- einen ersten Arbeitsbereich (20), in dem die mindestens eine Hilfstrommel (22) betriebsfähig angeordnet ist;
- einen zweiten Arbeitsbereich (21), in dem die mindestens eine Arbeitstrommel (31) betriebsfähig angeordnet ist, und
- eine erste Übertragungsstation (33), in der die Übertragungsvorrichtungen (34) wirken.

16. Anlage nach einem oder mehreren der Ansprüche 12 bis 15, wobei die Organe zum Formen mindestens einer Gürtellage (8a, 8b) ein Einzugswerk (27) umfassen, nämlich zum Zuführen mindestens eines Erzeugnisses in Form eines aus elastomerem Material bestehenden Streifens, der Textilkorde umfasst, einer ersten Arbeitsstation (24), die dafür ausgelegt ist, das mindestens eine Erzeugnis um die Hilfstrommel (22) zu wickeln.

17. Anlage nach einem oder mehreren der Ansprüche 12 bis 16, wobei die Vorrichtungen zum Formen einer Gürtelstruktur (8) ferner ein Einzugswerk (30) umfassen, nämlich zum Zuführen eines Paares bandförmiger Verstärkungseinlagen (8c) einer zweiten Arbeitsstation (25), die dafür ausgelegt ist, die bandförmigen Verstärkungseinlagen (8c) um die mindestens eine Gürtellage (8a, 8b) zu wickeln.

18. Anlage nach einem oder mehreren der Ansprüche 12 bis 17, wobei die Vorrichtungen zum Formen einer Gürtelstruktur (8) einen Wagen (23) umfassen, der die Hilfstrommel (22) trägt und beweglich ist, um die Hilfstrommel wahlweise vor mindestens einer ersten Arbeitsstation (24) und einer zweiten Arbeitsstation (25) zu positionieren.

19. Anlage nach einem oder mehreren der Ansprüche 12 bis 18, wobei die Organe zum Umschlagen der sich axial gegenüberliegenden Seitenlappen (10) der mindestens einen Gürtellage (8a, 8b) zumindest teilweise in die Hilfstrommel (22) integriert sind.

20. Anlage nach einem oder mehreren der Ansprüche 12 bis 19, wobei die Kronenstruktur-Fertigungslinie (14) ferner Aufwickelvorrichtungen (35) zum Aufwickeln mindestens eines Verstärkungselements aus elastomerem Material über den Umfang in Windungen umfasst, die um die mindestens eine Gürtellage (8a, 8b) axial nebeneinander angeordnet werden, wobei in das Verstärkungselement in Längsrichtung mindestens ein endloser Kord eingearbeitet ist, wobei die Aufwickelvorrichtungen (35) an der Gürtelstruktur (8) wirken, die von der Arbeitstrommel (31) in einer dritten Arbeitsstation (36) getragen wird.

21. Anlage nach einem oder mehreren der Ansprüche 12 bis 20, wobei die mindestens eine Arbeitstrommel (31) mit mindestens einer dritten und einer vierten Arbeitsstation (37) gekoppelt ist.

22. Anlage nach dem vorhergehenden Anspruch, die mindestens eine erste Arbeitstrommel (31a) und eine zweite Arbeitstrommel (31b) umfasst, die gleichzeitig, jede in einer der dritten bzw. vierten Arbeitsstation (37), betrieben werden.

23. Anlage nach einem oder mehreren der Ansprüche 12 bis 22, wobei die Übertragungsvorrichtungen (34) ein erstes Übertragungsorgan (34a) umfassen, das abwechselnd um die Hilfstrommel (22) und um die Arbeitstrommel (31) positioniert wird.

24. Anlage nach Anspruch 23, wobei das erste Übertragungsorgan (34a) in der Kronenstruktur-Fertigungslinie (14) im Wesentlichen fixiert ist.

25. Anlage nach einem oder mehreren der Ansprüche 12 bis 24, die eine zweite Übertragungsstation (16) mit mindestens einem zweiten Übertragungsorgan (39) umfasst, das abwechselnd um die Arbeitstrommel (31) und um eine in der Karkassenstruktur-Fertigungslinie (13) betriebene Haupttrommel (17) positioniert werden kann.

## Revendications

1. Procédé pour la production de pneus, comprenant :
- la construction d'une structure de carcasse (2a) ;
- la construction d'une structure de sommet (7) ;
- le couplage de la structure de sommet (7) à la structure de carcasse (2a),
dans lequel la construction de la structure de sommet (7) comprend :
- la formation d'au moins une couche de ceinture (8a, 8b) sur un tambour auxiliaire (22) pour fabriquer au moins partiellement une structure de ceinture (8) ;
- le retournement des rebords latéraux axialement opposés (10) de ladite au moins une couche de ceinture (8a, 8b) sur le tambour auxiliaire (22) ;
- le transfert de la structure de ceinture (8) du tambour auxiliaire (22) à au moins un tambour de service (31) ;
- la formation d'une bande de roulement (9) en enroulant au moins un élément allongé continu de matériau élastomère, en formant des spires disposées mutuellement côte-à-côte autour de la structure de ceinture (8) portée par le tambour de service (31).

2. Procédé tel que revendiqué dans la revendication précédente, dans lequel l'action de formation, sur ledit tambour auxiliaire (22), de la structure de ceinture (8) d'au moins un premier pneu en cours de traitement est au moins partiellement effectuée simultanément avec l'action de formation de la bande de roulement (9) d'au moins un deuxième pneu en cours de traitement, sur ledit au moins un tambour de service (31).

3. Procédé tel que revendiqué dans l'une ou plusieurs des revendications précédentes, dans lequel l'action de couplage de la structure de sommet (7) à la structure de carcasse (2a) est effectuée en suivant la même vitesse de fonctionnement suivie par les actions de formation de la bande de roulement (9) et de formation de la structure de ceinture (8).

4. Procédé tel que revendiqué dans l'une ou plusieurs des revendications précédentes, dans lequel sur des tambours de service respectifs, la construction des structures de sommet (7) appartenant à des pneus respectifs en cours de traitement est effectuée simultanément.

5. Procédé tel que revendiqué dans l'une ou plusieurs des revendications précédentes, dans lequel l'action de formation de la bande de roulement (9) du premier pneu en cours de traitement et l'action de formation de la bande de roulement (9) du deuxième pneu en cours de traitement sont au moins partiellement effectuées simultanément avec la fabrication de la structure de ceinture (8) d'un autre pneu en cours de traitement.

6. Procédé tel que revendiqué dans l'une ou plusieurs des revendications précédentes, comprenant en outre l'action de positionnement et de support dudit au moins un tambour de service (31) au moyen d'au moins un bras robotisé (32) pendant l'action de transfert de la structure de ceinture (8) du tambour auxiliaire (22) audit au moins un tambour de service (31).

7. Procédé tel que revendiqué dans l'une ou plusieurs des revendications précédentes, dans lequel la construction de la structure de sommet (7) comprend en outre l'action d'enroulement de manière circonférentielle d'une paire d'inserts de renforcement en forme de ruban (8c), chacun d'eux étant superposé radialement sur un bord d'extrémité (10a) de l'un des rebords latéraux retournés (10) de ladite au moins une couche de ceinture (8a, 8b).

8. Procédé tel que revendiqué dans l'une ou plusieurs des revendications précédentes, dans lequel la construction de la structure de sommet (7) comprend en outre l'action d'enroulement de manière circonférentielle d'au moins un élément de renforcement de matériau élastomère incorporant longitudinalement au moins un câblé continu, en spires disposées dans une relation côte-à-côte axiale autour de ladite au moins une couche de ceinture (8a, 8b), où l'enroulement dudit élément de renforcement est effectué sur la structure de ceinture (8) transférée sur le tambour de service (31).

9. Procédé tel que revendiqué dans l'une ou plusieurs des revendications précédentes, dans lequel le transfert de la structure de ceinture (8) du tambour auxiliaire (22) audit au moins un tambour de service (31) comprend les actions :
- de retrait de la structure de ceinture (8) du tambour auxiliaire (22) par un premier élément de transfert (34a) ;
- d'engagement de la structure de ceinture (8) sur le tambour de service (31) par le premier élément de transfert (34a) .

10. Procédé tel que revendiqué dans la revendication 9, dans lequel le premier élément de transfert (34a) maintient un positionnement fixe pendant le transfert de la structure de ceinture (8).

11. Procédé tel que revendiqué dans l'une ou plusieurs des revendications précédentes, dans lequel le couplage de la structure de sommet (7) à la structure de carcasse (2a) comprend l'action de transfert de la structure de sommet (7) du tambour de service (31) à un tambour primaire (17) portant la structure de carcasse (2a), où le transfert de la structure de sommet (7) du tambour de service (31) au tambour primaire (17) comprend les actions :
- de retrait de la structure de sommet (7) du tambour de service (31) par un deuxième élément de transfert (39) ;
- d'engagement de la structure de sommet (7) sur le tambour primaire (17) par le deuxième élément de transfert (39).

12. Installation pour la production de pneus, comprenant :
- une ligne de construction pour structures de carcasse (13) ;
- une ligne de construction pour structures de sommet (14) ;
- un emplacement d'assemblage (15) dans lequel chaque structure de sommet (7) est couplée à l'une des structures de carcasse (2a) ;
où ladite ligne de construction pour structures de sommet (14) comprend :
- au moins un tambour auxiliaire (22) ;
- au moins un tambour de service (31) ;
- des dispositifs pour former une structure de ceinture (8) sur ledit tambour auxiliaire (22), lesdits dispositifs comprenant des éléments pour former au moins une couche de ceinture (8a, 8b) et des éléments pour retourner des rebords latéraux axialement opposés (10) de ladite au moins une couche de ceinture (8a, 8b) sur ledit tambour auxiliaire ;
- des dispositifs de transfert (34) pour transférer une structure de ceinture (8) formée au moins partiellement sur le tambour auxiliaire (22) audit au moins un tambour de service (31) ;
- des dispositifs pour former une bande de roulement (9) par enroulement d'au moins un élément allongé continu de matériau élastomère, en formant des spires disposées dans une relation côte-à-côte mutuelle autour de la structure de ceinture (8) portée par le tambour de service (31).

13. Installation telle que revendiquée dans la revendication précédente, dans laquelle les dispositifs de formation de structure de ceinture (26) et les dispositifs de formation de bande de roulement (38) fonctionnent simultanément les uns avec les autres, sur la structure de ceinture (8) et la bande de roulement (9) respectivement, de pneus respectifs en cours de traitement.

14. Installation telle que revendiquée dans l'une ou plusieurs des revendications 12 et 13, dans laquelle les dispositifs de formation de structure de ceinture (26) et les dispositifs de formation de bande de roulement (38) fonctionnent simultanément avec la fabrication d'au moins une structure de carcasse (2a) dans la ligne de construction de structures de carcasse (13).

15. Installation telle que revendiquée dans l'une ou plusieurs des revendications 12 à 14, dans laquelle ladite ligne de construction de structures de sommet (14) comprend :
- une première zone de travail (20) dans laquelle ledit au moins un tambour auxiliaire (22) est disposé de manière fonctionnelle ;
- une deuxième zone de travail (21) dans laquelle ledit au moins un tambour de service (31) est disposé de manière fonctionnelle, et
- un premier emplacement de transfert (33) dans lequel lesdits dispositifs de transfert (34) fonctionnent.

16. Installation telle que revendiquée dans l'une ou plusieurs des revendications 12 à 15, dans laquelle lesdits éléments de formation d'au moins une couche de ceinture (8a, 8b) comprennent une unité d'alimentation (27) pour fournir au moins un article fabriqué sous la forme d'une bande de matériau élastomère comprenant des câblés textiles, à un premier emplacement de travail (24) conçu pour enrouler ledit au moins un article fabriqué autour du tambour auxiliaire (22).

17. Installation telle que revendiquée dans l'une ou plusieurs des revendications 12 à 16, dans laquelle lesdits dispositifs de formation d'une structure de ceinture (8) comprennent en outre une unité d'alimentation (30) pour fournir une paire d'inserts de renforcement en forme de ruban (8c) à un deuxième emplacement de travail (25) conçu pour enrouler lesdits inserts de renforcement en forme de ruban (8c) autour de ladite au moins une couche de ceinture (8a, 8b).

18. Installation telle que revendiquée dans l'une ou plusieurs des revendications 12 à 17, dans laquelle lesdits dispositifs pour de formation d'une structure de ceinture (8) comprennent un chariot (23) portant le tambour auxiliaire (22) et mobile pour positionner de manière sélective ledit tambour auxiliaire à l'avant d'au moins un premier emplacement de travail (24) et un deuxième emplacement de travail (25).

19. Installation telle que revendiquée dans l'une ou plusieurs des revendications 12 à 18, dans laquelle lesdits éléments de retournement des rebords latéraux axialement opposés (10) de ladite au moins une couche de ceinture (8a, 8b) sont au moins partiellement intégrés dans ledit tambour auxiliaire (22).

20. Installation telle que revendiquée dans l'une ou plusieurs des revendications 12 à 19, dans laquelle ladite ligne de construction de structures de sommet (14) comprend en outre des dispositifs d'enroulement (35) pour enrouler de manière circonférentielle au moins un élément de renforcement de matériau élastomère en spires disposées axialement côte-à-côte autour de ladite au moins une couche de ceinture (8a, 8b), lequel élément de renforcement incorpore longitudinalement au moins un câblé continu, où lesdits dispositifs d'enroulement (35) fonctionnent sur la structure de ceinture (8) portée par le tambour de service (31) dans un troisième emplacement de travail (36).

21. Installation telle que revendiquée dans l'une ou plusieurs des revendications 12 à 20, dans laquelle ledit au moins un tambour de service (31) est verrouillé avec au moins des troisième et quatrième emplacements de travail (37).

22. Installation telle que revendiquée dans la revendication précédente, comprenant au moins un premier tambour de service (31a) et un deuxième tambour de service (31b) fonctionnant chacun simultanément à l'un desdits troisième et quatrième emplacements de travail (37).

23. Installation telle que revendiquée dans l'une ou plusieurs des revendications 12 à 22, dans laquelle lesdits dispositifs de transfert (34) comprennent un premier élément de transfert (34a) à positionner en alternance autour du tambour auxiliaire (22) et autour du tambour de service (31).

24. Installation telle que revendiquée dans la revendication 23, dans laquelle le premier élément de transfert (34a) est sensiblement fixe dans ladite ligne de construction de structures de sommet (14).

25. Installation telle que revendiquée dans l'une ou plusieurs des revendications 12 à 24, comprenant un deuxième emplacement de transfert (16) comportant au moins un deuxième élément de transfert (39) qui peut être positionné en alternance autour du tambour de service (31) et autour d'un tambour primaire (17) fonctionnant dans la ligne de construction de structures de carcasse (13).
